# EUROPÄISCHE PATENTSCHRIFT

(11) **EP 1 779 018 B1**
(45) Veröffentlichungstag und Bekanntmachung des Hinweises auf die Patenterteilung: **15.04.2009**
(21) Anmeldenummer: 04798076.8
(22) Anmeldetag: 25.11.2004
(51) Int. Cl.: F16L 37/14

(54) **KUPPLUNG**
COUPLING
RACCORD

(30) Priorität: 11.08.2004 DE 102004038912
(43) Veröffentlichungstag der Anmeldung: 02.05.2007
(73) Patentinhaber: A. Raymond & Cie, 38028 Grenoble (FR)
(72) Erfinder: FEGER, Axel, 79540 Lörrach (DE); TREDE, Michael, F-68440 Habsheim (FR)
(74) Vertreter: Rüttgers, Joachim
(86) Internationale Anmeldenummer: PCT/EP2004/013368
(87) Internationale Veröffentlichungsnummer: WO 2006/018038

(56) Entgegenhaltungen:
- WO-A-98/28567
- DE-C1- 19 946 260
- US-A- 2 021 241

## Beschreibung

Die Erfindung betrifft eine Kupplung gemäß dem Oberbegriff des Patentanspruches 1.

Eine derartige Kupplung ist aus der WO 9 828 567 bekannt. Die weitere aus DE 199 46 260 C1 vorbekannte Kupplung verfügt über ein Aufnahmeteil zum Aufnehmen eines mit einem Rückhaltering ausgebildeten Einsteckteiles. Weiterhin ist ein Sicherungsteil vorhanden, das zwei Arme und einen Rückhalteabschnitt aufweist, wobei das Sicherungsteil in einen Aufnahmeraum des Aufnahmeteiles einfügbar und rechtwinklig zu einer Einsteckrichtung des Einsteckteiles zwischen einer ausgefahrenen Stellung und einer eingeschobenen Stellung bewegbar ist. Dadurch ist das Einsteckteil bei Anordnen des Sicherungsteiles in der eingeschobenen Stellung über Hintergreifen des Rückhalteringes durch den Rückhalteabschnitt gegen unbeabsichtigtes Herausrutschen aus dem Aufnahmeteil gesichert. Allerdings ist es möglich, dass sich das Sicherungsteil in der eingeschobenen Stellung befindet, ohne dass das Einsteckteil ordnungsgemäß gesichert ist.

Der Erfindung liegt die Aufgabe zugrunde, eine Kupplung der eingangs genannten Art anzugeben, die sich durch eine hohe Montagesicherheit auszeichnet.

Diese Aufgabe wird bei einer Kupplung der eingangs genannten Art erfindungsgemäß mit den kennzeichnenden Merkmalen des Patentanspruches 1 gelöst.

Dadurch, dass bei der erfindungsgemäßen Kupplung eine Sperranordnung vorhanden ist, die ein Überführen des Sicherungsteiles von der ausgefahrenen Stellung in die eingefahrene Stellung mit Hintergreifen des Rückhalteringes durch den Rückhalteabschnitt nur denn behinderungsfrei gestattet, wenn durch das Anordnen des Rückhalteringes im Bereich der Arme die Wirkung der Sperranordnung aufgehoben ist, wird eine zuverlässige Erkennbarkeit einer korrekten Montage erzielt, die insbesondere bei Fließbandarbeiten mit zeitlich eng getakteter Verbindung von erfindungsgemäßen Kupplungen mit Einsteckteilen von großer Bedeutung ist.

Weitere zweckmäßige Ausgestaltungen der Erfindung sind Gegenstand des Unteransprüchs.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer teilgeschnittenen perspektivischen Ansicht ein Ausführungsbeispiel einer erfindungsgemäßen Kupplung mit einem Aufnahmeteil und einem Sicherungsteil sowie ein in die erfindungsgemäße Kupplung einzufügendes Einsteckteil,
- Fig. 2: in einem Querschnitt das Ausführungsbeispiel gemäß Fig. 1 im Bereich von Armen des Sicherungsteiles,
- Fig. 3: in einem Querschnitt das Ausführungsbeispiel gemäß Fig. 1 im Bereich der Arme des Sicherungsteiles mit einem eingefügten Einsteckteil sowie dem Sicherungsteil in einer ausgefahrenen Stellung und
- Fig. 4: in einem Querschnitt das Ausführungsbeispiel gemäß Fig. 1 im Bereich der Arme des Sicherungsteiles mit einem eingefügten Einsteckteil sowie dem Sicherungsteil in einer eingeschobenen Stellung.

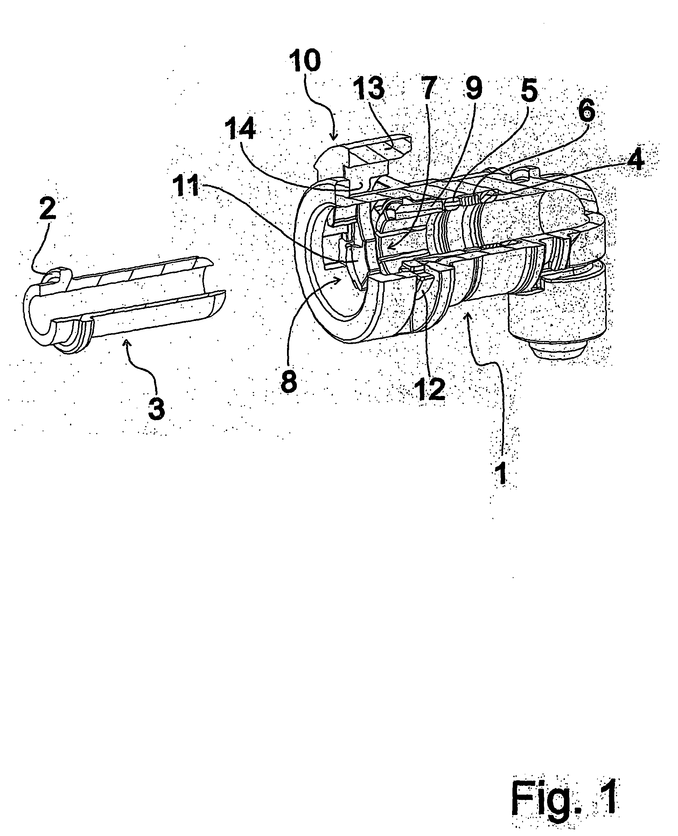

Fig. 1 zeigt in einer teilgeschnittenen perspektivischen Ansicht ein Ausführungsbeispiel einer erfindungsgemäßen Kupplung. Die Kupplung gemäß Fig. 1 verfügt über ein Aufnahmeteil 1, das mit einem in Fig. 1 nicht dargestellten Ende einer Leitung eines Fluidleitungssystems verbindbar ist. Zum abgedichteten Verbinden der erfindungsgemäßen Kupplung mit einem mit einem Rückhaltering 2 ausgebildeten Einsteckteiles 3 sind ein erster Dichtungsring 4, ein zweiter Dichtungsring 5 und ein zwischen den Dichtungsringen 4, 5 angeordneter Zwischenring 6 in einem Aufnahmeraum 7 des Aufnahmeteiles 1 vorhanden. Ein auf der einer Einsteckseite 8 zugewandten Seite des zweiten Dichtungsringes 5 benachbart angeordneter Distanzring 9 dient dem Halten der Distanzringe 4, 5 und des Zwischenringes 6 zwischen dem der Einsteckseite 8 abgewandten Seite des Aufnahmeraumes 7 und einem Sicherungsteil 10 der erfindungsgemäßen Kupplung.

Das Sicherungsteil 10 ist in dem Aufnahmeteil 1 zwischen einer in Fig. 1 dargestellten ausgefahrenen Stellung sowie einer eingeschobenen Stellung verschiebbar und weist einen ersten Arm 11 sowie einen zweiten Arm 12 auf, die einander gegenüberliegend angeordnet sind und mit einem innenseitigen Abschnitt in den Aufnahmeraum 7 hineinragen. Weiterhin ist an einem sich zwischen den Armen 11, 12 erstreckenden Querabschnitt 13 ein Rückhalteabschnitt 14 ausgebildet, der, wie weiter unten näher erläutert, bei einem ordnungsgemäß eingesteckten Einsteckteil 3 in einer vollständig eingeschobenen Stellung des Sicherungsteiles 10 den Rückhaltering 3 hintergreift.

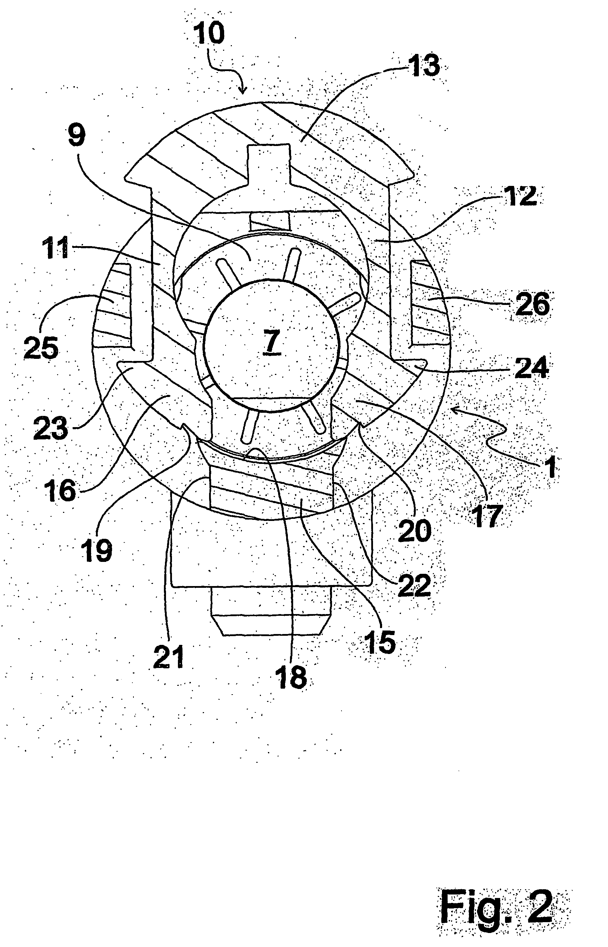

Fig. 2 zeigt das Ausführungsbeispiel gemäß Fig. 1 im Querschnitt im Bereich der Arme 11, 12 mit dem Sicherungsteil 10 in der ausgefahrenen Stellung. Aus Fig. 2 ist ersichtlich, dass das Aufnahmeteil 1 über eine Bodenbrücke 15 als ein Element einer Sperranordnung verfügt, die im Bereich der Arme 11, 12 des Sicherungsteiles 10 dem Querabschnitt 13 gegenüberliegend angeordnet ist. Die Breite der Bodenbrücke 15 ist größer als der Abstand zwischen freien Enden 16, 17 der Arme 11, 12, wenn, wie Fig. 2 dargestellt, das Sieherungsteil 10 insbesondere in einem Anlieferzustand in der ausgefahrenen Stellung und das Einsteckteil 3 nicht oder nicht so weit eingesteckt ist, dass der Rückhaltering 2 zwischen den Armen 11, 12 angeordnet ist. Dadurch liegen als weitere Element der Sperranordnung die freien Enden 16, 17 der Arme 11, 12 an einer dem Aufnahmeraum 7 zugewandten Innenwand 18 der Bodenbrücke 15 an und behindern das Überführen des Sicherungsteiles 10 in die vollständig eingeschobene Stellung.

Aus Fig. 2 ist ersichtlich, dass an jedem freien Ende 16, 17 in einem Abstand von dem äußerten Ende des jeweiligen freien Endes 16, 17 ein Blockierabsatz 19, 20 einer Blockieranordnung ausgebildet ist. Dadurch ist zum Vermeiden von Überlastungen der Arme 11, 12 sichergestellt, dass bei Ausüben einer in Richtung der Bodenbrücke 15 wirkenden Kraft auf den Querabschnitt 13 das Sicherungsteil 10 über einen durch die radiale und axiale Anordnung der Blockierabsätze 19, 20 vorbestimmten Einfahrweg eintaucht, bis die Blockierabsätze 19, 20 an zwischen der Innenwand 18 und Seitenwänden 21, 22 der Bodenbrücke 15 ausgebildeten Kanten anliegen und eine weitere Bewegung des Sicherungsteiles 10 in Richtung der vollständig eingeschobenen Stellung blockieren.

Weiterhin lässt sich in Fig. 2 erkennen, dass an den Außenseiten der Arme 11, 12 jeweils eine radial nach außen abstehende Sicherungnase 23, 24 ausgebildet ist, die zum Sichern des Sicherungstelles 10 gegen unbeabsichtigtes Herausziehen aus dem Aufnahmeteil 1 mit sich in Längsrichtung des Aufnahmeteiles 1 erstreckenden und seitlich der Arme 11, 12 angeordneten Seitenbrücken 25, 26 zusammenwirken, indem sie ohne das Ausüben einer radial nach innen wirkenden Kraft auf die Arme 11, 12 zu deren zum Entnehmen des Sicherungsteiles 10 ausreichend weiten Annäherung gegen die Seitenbrücken 25, 26 anschlagen.

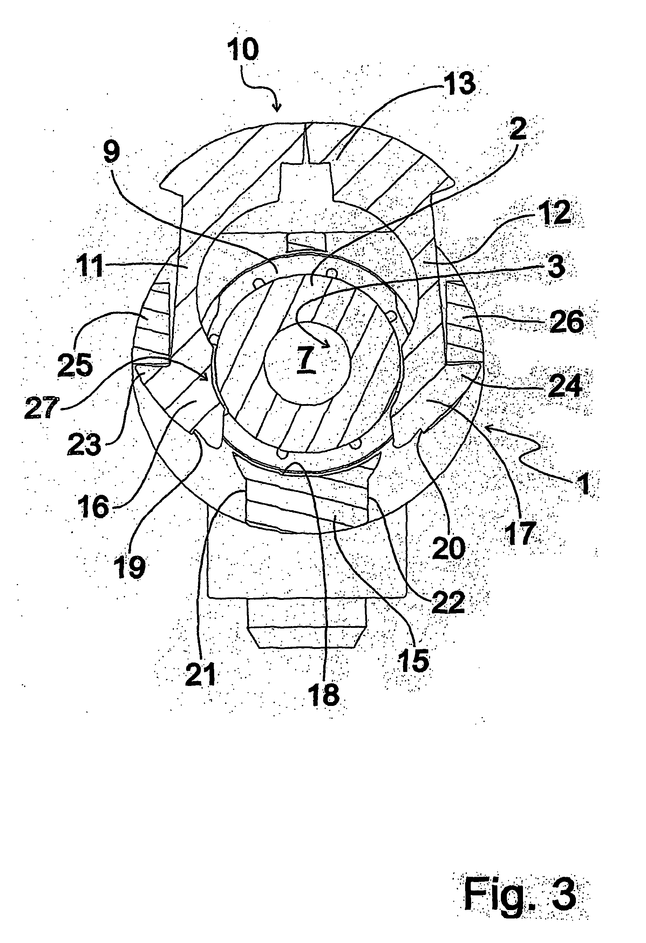

Fig. 3 zeigt das Ausführungsbeispiel gemäß Fig. 1 in einer Fig. 2 entsprechenden Darstellung mit einem so weit in das Aufnahmeteil 1 eingesteckten Einsteckteil 3, dass der Rückhaltering 2 zwischen den Armen 11, 12 angeordnet ist, wobei es in diesem Zusammenhang zweckmäßig ist, dass zum Erleichtern des Einsteckens des Einsteckteiles 3 in die in Fig. 3 dargestellte Position die in Richtung der Einsteckseite 8 weisenden Seiten der Arme 11, 12 Aufgleitschrägen aufweisen. Aus Fig. 3 ist ersichtlich, dass nur in dieser Anordnung des Einsteckteiles 3 die mit einem an den Außendurchmesser des Rückhalteringes 2 angepassten ersten Aufnahmebereich 27 ausgebildeten freien Enden 16, 17 der Arme 11, 12 so weit voneinander beabstandet sind, dass der Eingriff zwischen den Elementen der Sperranordnung, bei dem erläuterten Ausführungsbeispiel der Bodenbrücke 15 und den freier Enden 16, 17 der Arme 11, 12, gelöst ist.

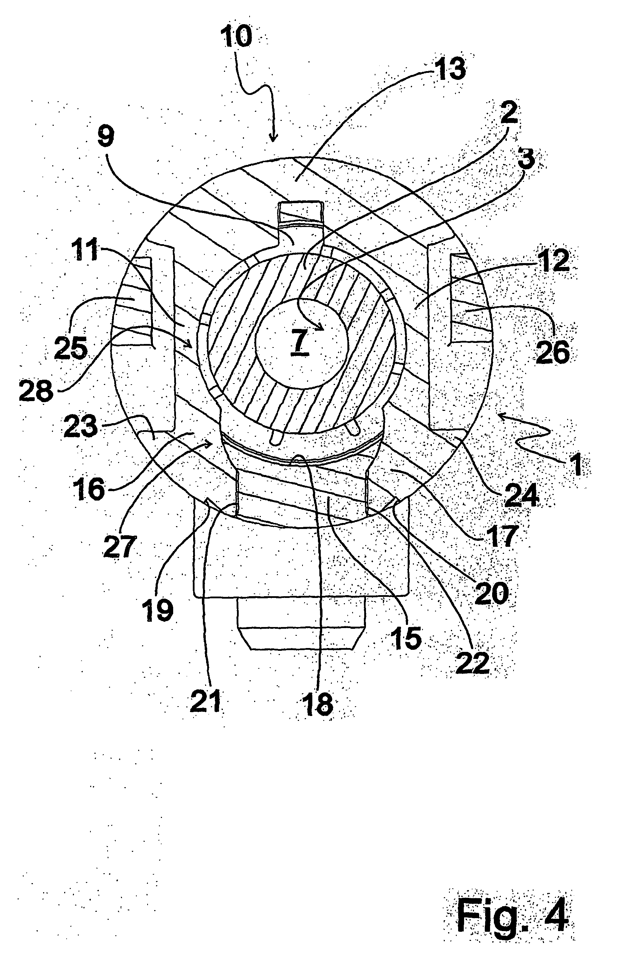

Fig. 4 zeigt das Ausführungsbeispiel gemäß Fig. 1 mit dem eingesteckten Einsteckteil 3 in der Anordnung gemäß Fig. 3, wobei das Sicherungsteil 10 in nunmehr in einer vollständig eingeschobenen Stellung angeordnet ist. In der in Fig. 4 dargestellten vollständig eingeschobenen Stellung des Sicherungsteiles 10 hintergreift der in der Darstellung gemäß Fig. 4 nicht sichtbare Rückhalteabschnitt 14 den Rückhaltering 2 und sichert damit das Einsteckteil 3 gegen unbeabsichtigtes Herausziehen aus dem Aufnahmeteil 1. Weiterhin ist Fig. 4 zu entnehmen, dass die in einem Abschnitt ausgestellten Seitenwände 21, 22 der Bodenbrücke 15 und die diesen Abschnitten der Seitenwände 21, 22 zugewandten Innenseiten der Arme 11, 12 aufeinander angepasste Außenkonturen, aufweisen, so dass in einem an den freien Enden 16, 17 ausgebildeten zweiten Aufnahmebereich 28 mit einem gegenüber dem Umfang des Rückhalteringes 2 größeren Innendurchmesser der Rückhaltering 2 über einen gewissen Abstand von den freien Armen 11, 12 verfügt.

## Patentansprüche

1. Kupplung mit einem mit einem Rückhaltering (2) ausgebildeten Einsteckteil (3), mit einem Aufnahmeteil (1) zum Aufnehmen des Einsteckteiles (3) und mit einem Sicherungsteil (10), das zwei Arme (11, 12) und einen Rückhalteabschnitt (14) aufweist, wobei das Sicherungsteil (10) in einen Aufnahmeraum (7) des Aufnahmeteiles (1) einfügbar und rechtwinklig zu einer Einsteckrichtung des Einsteckteiles (3) zwischen einer ausgefahrenen Stellung und einer eingeschobenen Stellung bewegbar ist, wobei das Aufnahmeteil (1) und das Sicherungsteil (10) eine Sperranordnung (15, 16, 17) aufweisen und an dem Aufnahmeteil (1) sowie an dem Sicherungsteil (10) ausgebildete Elemente (15, 16, 17) der Sperranordnung bei nicht ordnungsgemäß in das Aufnahmeteil (1) eingefügtem Einsteckteil (3) derart in Eingriff miteinander sind, dass das Sicherungsteil (10) ausgehend von der ausgefahrenen Stellung am Überführen in die eingeschobene Stellung behindert ist, **dadurch gekennzeichnet, dass** ein an dem Aufnahmeteil (1) ausgebildetes Element der Sperranordnung ein den Aufnahmeraum (7) im hinteren Bereich begrenzender sowie sich quer zu der Einsteckrichtung erstreckender Brückenabschnitt (15) ist und dass weitere Elemente der Sperranordnung durch freie Enden (16, 17) der Arme (11, 12) des Sicherungsteiles (10) gebildet sind, wobei der Brückenabschnitt (15) eine Breite aufweist, die größer als der Abstand zwischen den Armen (11, 12) in der ausgefahrenen Stellung des Sicherungsteiles (10) ist, und dass bei Anordnen des Rückhalteringes (2) im Bereich der Arme (11, 12) die Arme (11, 12) so weit voneinander beabstandet sind, dass der Eingriff zwischen der Bodenbrücke (15) sowie den freien Enden (16, 17) der Arme (11, 12) gelöst und das Sicherungsteil (10) unter Hintergreifen des Rückhalteringes (2) durch den Rückhalteabschnitt (14) in die eingeschobene Stellung bewegbar ist.

2. Kupplung nach Anspruch 1, **dadurch gekennzeichnet, dass** die Arme (11, 12) eine Blockieranordnung (19, 20) aufweisen, die bei Einwirken auf das Sicherungsteil (10) zum Überführen von der ausgefahrenen Stellung in die eingeschobene Stellung mit der Sperranordnung (15, 16, 17) derart zusammenwirkt, dass die Bewegung des Sicherungsteiles (10) ab einem vorbestimmten Einfahrweg blockiert ist.

## Claims

1. Coupling comprising an insertion part (3) formed with a retaining ring (2), comprising a receiving part (1) for receiving the insertion part (3) and comprising a securing part (10) which has two arms (11, 12) and a retaining section (14), the securing part (10) being insertable into a receiving chamber (7) of the receiving part (1) and being moveable at right angles to an insertion direction of the insertion part (3) between a withdrawn position and an inserted position, the receiving part (1) and the securing part (10) having a locking arrangement (15, 16, 17) and elements (15, 16, 17) of the locking arrangement which are formed on the receiving part (1) and on the securing part (10) engage one another, when insertion part (3) is not properly inserted into the receiving part (1), in such a way that the securing part (10), starting from the withdrawn position, is prevented from being transferred to the inserted position, **characterized in that** an element of the locking arrangement which is formed on the receiving part (1) is a bridge section (15) bounding the receiving chamber (7) in the rear region and extending transversely to the insertion direction, and **in that** further elements of the locking arrangement are formed by free ends (16, 17) of the arms (11, 12) of the securing part (10), the bridge section (15) having a width which is greater than the distance between the arms (11, 12) in the withdrawn position of the securing part (10), and **in that**, when the retaining ring (2) is arranged in the region of the arms (11, 12), the arms (11, 12) are so far apart that the bottom bridge (15) and the free ends (16, 17) of the arms (11, 12) no longer engage one another, and the securing part (10) can be moved into the inserted position, the retaining section (14) gripping behind the retaining ring (2).

2. Coupling according to Claim 1, **characterized in that** the arms (11, 12) have a blocking arrangement (19, 20) which, during action on the securing part (10) for transfer from the withdrawn position to the inserted position, cooperates with the locking arrangement (15, 16, 17) in such a way that the movement of the securing part (10) is blocked from a predetermined insertion distance.

## Revendications

1. Raccord se composant d'un élément d'emmanchement mâle (3) muni d'une bague de retenue (2), d'un élément formant logement d'insertion (1) destiné à recevoir l'élément d'emmanchement mâle (3) et d'un élément d'immobilisation en position (10) qui comporte deux segments (11, 12) et une portion de retenue (14), dans lequel l'élément d'immobilisation en position (10) peut être emmanché dans le gabarit de réception (7) de l'élément formant logement d'insertion (1) et déplacé, perpendiculairement au sens de l'emmanchement de l'élément d'emmanchement mâle (3), entre une position de dégagement et une position d'insertion en prise d'encastrement, dans lequel l'élément formant logement d'insertion (1) et l'élément d'immobilisation en position (10) sont munis d'un dispositif de verrouillage (15, 16, 17), les organes de verrouillage (15, 16, 17) qui constituent ledit dispositif de verrouillage, respectivement prévus sur l'élément formant logement d'insertion (1) ainsi que sur l'élément d'immobilisation en position (10), étant en l'occurrence, si l'élément d'emmanchement mâle (3) n'est pas correctement emmanché dans l'élément formant logement d'insertion (1), en prise d'engagement réciproque dans des conditions telles qu'il n'est pas possible de faire passer l'élément d'immobilisation en position (10) de sa position de dégagement dans sa position d'insertion en prise d'encastrement, **caractérisé en ce qu'**un des éléments constitutifs du dispositif de verrouillage, réalisé solidaire de l'élément formant logement d'insertion (1), consiste en un segment formant pontet (15) qui limite la portion arrière du gabarit de réception (7) et qui s'étend transversalement par rapport au sens de l'emmanchement et **en ce que** les autres éléments composant le dispositif de verrouillage sont constitués par les extrémités libres (16, 17) des segments (11, 12) de l'élément d'immobilisation en position (10), le segment formant pontet (15) ayant en l'occurrence une largeur qui est supérieure à l'intervalle séparant l'un de l'autre les segments (11, 12) dans la position de dégagement de l'élément d'immobilisation en position (10) et **en ce que**, lorsque la bague de retenue (2) est disposée dans la zone des segments (11, 12), les segments (1, 12) sont écartés l'un de l'autre dans une proportion telle que le pontet de fond (15) ainsi que les extrémités libres (16, 17) des segments (11, 12) sont dégagés de leur emprise d'accrochage réciproque et qu'il est possible, sous l'action de cramponnement par derrière de la bague de retenue (2), exercé par la portion de retenue (14), d'amener l'élément d'immobilisation en position (10) dans sa position d'emmanchement.

2. Raccord selon la revendication 1, **caractérisé en ce que** les segments (11, 12) comportent un dispositif de blocage (19, 20) qui, lorsqu'une action est exercée sur l'élément d'immobilisation en position (10) pour le faire passer de sa position de dégagement dans sa position d'emmanchement, opère en combinaison avec le dispositif de verrouillage (15, 16, 17) dans des conditions telles que le déplacement de l'élément d'immobilisation en position (10) est bloqué à partir d'une longueur de course d'introduction prédéterminée.
